(19) Europäisches Patentamt
European Patent Office
Office européen des brevets

(11) Veröffentlichungsnummer: **0 107 131**
**B1**

(12) # EUROPÄISCHE PATENTSCHRIFT

(45) Veröffentlichungstag der Patentschrift: **22.07.87**

(21) Anmeldenummer: **83110034.2**

(22) Anmeldetag: **07.10.83**

(51) Int. Cl.⁴: **C 10 J 3/08**, C 10 J 3/84, C 10 J 3/46, C 22 C 33/00, C 01 B 31/32, C 01 B 25/027, C 22 B 13/00

(54) **Verfahren und Vorrichtung zur Herstellung von Synthesegas.**

(30) Priorität: **27.10.82 DE 3239774**

(43) Veröffentlichungstag der Anmeldung: **02.05.84 Patentblatt 84/18**

(45) *Bekanntmachung des Hinweises auf die Patenterteilung:* **22.07.87 Patentblatt 87/30**

(84) Benannte Vertragsstaaten: **DE GB IT**

(56) Entgegenhaltungen:
EP-A-0 072 457
DE-A-1 021 835
DE-B-1 020 434
DE-B-1 146 221
FR-A-1 041 273
GB-A-229 331
GB-A-237 883
GB-A-2 094 337
US-A-3 841 851
US-A-4 153 426

(73) Patentinhaber: **HOECHST AKTIENGESELLSCHAFT, Postfach 80 03 20, D-6230 Frankfurt am Main 80 (DE)**
Patentinhaber: **Uhde GmbH, Friedrich- Uhde-Strasse 15 Postfach 262, D-4600 Dortmund 1 (DE)**

(72) Erfinder: **Pietzarka, Friedrich- Wilhelm, Dr., Gögestrasse 11, D-4600 Dortmund 50 (DE)**
Erfinder: **Meurer, Peter, Dr., Wilhelm- Huck-Strasse 39a, D-5804 Herdecke- Ende (DE)**
Erfinder: **Portz, Willi, Dr., Zum Schlagbaum 2, D-5042 Erftstadt (DE)**
Erfinder: **Kampmann, Friedrich- Wilhelm, Dr., Fasanenaue 6, D-5042 Erftstadt (DE)**

(74) Vertreter: **Hubbuch, Klaus, Dr., Hoechst Aktiengesellschaft WERK KNAPSACK Postfach 29 02, D-5030 Hürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



LIBER, STOCKHOLM 1987

**Beschreibung**

Die Erfindung betrifft ein Verfahren und eine Vorrichtung zur Herstellung von Synthesegas ($CO + H_2$) durch autotherme Vergasung feinteiliger, kohlenstoffreicher Materialien mit Sauerstoff in Gegenwart von Ausgangsstoffen für eine endotherme carbothermische Reduktion.

Seit etwa 1973/74 werden Verfahren zur Synthesegaserzeugung aus Kohle und anderen festen Brennstoffen, besonders solche unter erhöhtem Druck, intensiv weiterentwickelt, um heimische Energie- und Rohstoffquellen verstärkt auszunutzen. Solche Verfahren sind in der Literatur eingehend beschrieben (z.B. Ullmanns Encyklopädie der Technischen Chemie, 4. Auflage, Band 14, Seite 375 ff.). Die US-A-3,841,851 beschreibt die Verwertung organischer Abfälle, z.B. von Hausmüll, ggf. unter Zusatz minderwertiger Brennstoffe, wie Altöl, durch Vergasung mit sauerstoffhaltigen Gasen unter Ausbildung einer zentralen Aushöhlung in dem Bett der zu vergasenden Stoffe, wobei Heiz- oder Synthesegas gewonnen wird. Die anfallende schmelzflüssige, metallhaltige Schlakke wird abgezogen, granuliert und einer Deponie zugeführt. Eine zukünftige vermehrte großtechnische Anwendung derartiger Verfahren dürfte zu einem immensen Anfall von Aschen und Schlacken führen und ernsthafte Deponieprobleme aufwerfen. In der nichtvorveröffentlichten EP-A-0 072 457 wurde ein Verfahren und eine Vorrichtung zur Herstellung von Synthesegas beschrieben, wobei unter Zugabe von Zuschlagstoffen mindestens Teile der Asche als chemisch-technische Produkte, wie z.B. Ferrosilizium oder Calciumcarbid gewonnen werden.

Charakteristisch für die dort beschriebene Vorrichtung ist, daß seitlich an einem mit Zuschlagstoffmischung gefüllten Schachtofen (Abstichgenerator) Vergasungskammern angeordnet sind, die mit der Reduktionszone im Schachtofen in offener Verbindung stehen. In diese wird das kohlenstoffhaltige Material mit Sauerstoff und gegebenenfalls Zusatzgasen eingedüst und in ein extrem heißes, kohlenmonoxidhaltiges Synthesegas überführt, welches von dort in die eine Schüttung aus Zuschlagstoffen enthaltende Reduktionszone strömt, wo sich z.B. Ferrosilizium oder Calciumcarbid als Reduktionsprodukte bilden. Ein Teil der Asche aus den Einsatzstoffen wird mit dem Synthesegas als Staub ausgetragen, ein anderer durch chemische Reaktion umgewandelt und der Rest mit dem Reduktionsprodukt abgezogen.

Der Anteil der Asche aus den kohlenstoffreichen Materialien, der mit dem Synthesegas ausgetragen wird, hängt von der Vergasungstemperatur und der Reaktionstemperatur in der Reduktionszone ab. Verdampfung und partielle Reduktion der Oxide der Asche zu flüchtigen Suboxiden, z.B. $SiO$, sind u.a. dafür verantwortlich.

Es zeigt sich, daß die Reinheit der erzeugten Reduktionsprodukte stark von der Reinheit der Einsatzmaterialien, besonders des kohlenstoffreichen Materials abhängt. Bei Verwendung von beispielsweise sehr aschereichen Kohlen als Einsatzmaterial kann es sich als notwendig erweisen, deutlich höhere Temperaturen in der Vergasungs- und/oder Reduktionszone zu erzeugen, als sie für die Bildung der entsprechenden Reduktionsprodukte erforderlich wären, um größere Anteile der Asche in den Gasstrom zu überführen. Vorzugsweise sind hier Temperaturen zwischen 2000 und 3300°C anzustreben.

Betrachtet man einen Flugstromvergaser, der im Prinzip aus einem leeren, feuerfest ausgemauerten Reaktor besteht, oder auch die Vorrichtung der EP-A-0 072 457, die, wenn auch erheblich kleinere, jedoch ebenfalls leere, feuerfest ausgekleidete Vergasungskammern besitzt, so erkennt man leicht, daß bei Anwendung extremer Reaktionstemperaturen die Wand des Reaktors dem gleichzeitigen Angriff von reduzierender Atmosphäre und geschmolzener Asche bzw. Schlacke nicht standhalten kann. Insbesondere gilt dies für aschereiche Kohlen, wo schon bei herkömmlichen Synthesegaserzeugern und Vergasungstemperaturen zwischen 1500 und 2000°C erhebliche Schwierigkeiten beobachtet werden.

Daraus erwuchs die Aufgabe, ein Verfahren und eine Vorrichtung zu schaffen, welche bei gleicher Zielsetzung wie bei der EP-A-0 072 457 den Verschleiß an der Vorrichtung minimieren, somit deren Standzeit verlängern, eine Einflußnahme auf die Verteilung der Asche bzw. Schlacke zwischen Synthesegas und festem Reduktionsprodukt ermöglichen und eine erhöhte Reinheit des carbothermischen Reduktionsproduktes bewirken. Die vorliegende Erfindung löst diese Aufgabe in einfacher Weise, wobei gleichzeitig noch aus den Aschen der eingesetzten kohlenstoffhaltigen Materialien zumindest teilweise chemisch-technische Produkte erzeugt werden können. Es ergeben sich gegenüber dem Stand der Technik sowie der EP-A-0 072 457 zusammenfassend folgende Vorteile:

1. Die Reaktionstemperaturen in der Vergasungszone lassen sich in einem weiten Bereich von 1300 bis 3300° variieren.

2. Ein Verschleiß an einer feuerfesten Auskleidung der Vergasungskammer ist ausgeschlossen. Düsenspitzen und Düsendurchführungen sind ausreichend kühlbar.

3. Ein Verschleiß an den konstruktiven Teilen des schachtförmigen Abstichgenerators ist durch einen starken radialen Temperaturabfall mit Schutzschichtbildung auf den Innenwandungen minimiert.

4. Wärmeverluste werden minimiert.

5. Die Vergasungszone wirkt gleichzeitig als Gasverteiler.

6. Die erfindungsgemäße Vorrichtung ist im

wesentlichen rotationssymmetrisch und gewährleistet dadurch eine weitgehend gleichmäßige Gasverteilung.

7. Antelle der Zuschlagstoffmischung können auch durch die Düse in den Abstichgenerator eingebracht werden.

8. Aus der Rotationssymmetrie der erfindungsgemäßen Vorrichtung ergibt sich die Möglichkeit, diese in geeigneter Weise rotierend, leicht geneigt gegen die Lotrechte anzuordnen und eine intensive Durchmischung der Komponenten in der Sammel- und Nachreaktionskammer zu erreichen.

Diese Vorteile werden vorzugsweise dadurch erreicht, daß man in einem geschlossenen Reaktor, der ein Haufwerk aus kohlenstoffreichen, festen Materialien, wie Koks, Schwelkoks, Anthrazit, Holzkohle oder Torfkoks, und ggf. Zuschlagstoffen, wie Kalk, Eisenschrott und anderen, enthält, im Betriebsfall eine Aushöhlung oder zumindest eine Wirbelzone aus aufgelockertem Haufwerk in situ erzeugt, indem man mittels einer Düse ein staubförmiges kohlenstoffreiches Material, z.B. eines oder mehrere der obengenannten oder auch Steinkohle oder Braunkohle, zusammen mit Sauerstoff, gegebenenfalls in Gegenwart von Zusatzgasen wie Wasserdampf, Kohlenmonoxid, Stickstoff oder Kohlendioxid einbläst und zündet. Dabei ist das Mengenverhältnis der Vergasungsmittelkomponenten ($O_2$/ $H_2O$, $CO_2$), welche in der Vergasungszone mit Kohlenstoff zu Synthesegas reagieren, bevorzugt so eingestellt, daß das entstehende primäre Synthesegas die gewünschte Flammentemperatur von vorzugsweise 1300 - 2000° C erhält.

Dieses Mengenverhältnis ist mindestens so eingestellt, daß stetig eine bestimmte Menge des den erzeugten Hohlraum umgebenden Materials verbraucht wird. Auf diese Weise wird eine Vergasung der kohlenstoffreichen Materialien in zwei Stufen erreicht.

1. Eine Vorvergasung mit einem stöchiometrischen Kohlenstoffunterschuß, bezogen auf die Summe der Vergasungsmittel ($O_2$, $CO_2$, $H_2O$). Dem Prinzip nach handelt es sich hier um eine Gleich- oder Flugstromvergasung in einer sich kontinuierlich erneuernden leeren Vergasungskammer mit gasdurchlässigen Begrenzungsflächen, die gleichzeitig als Gasverteiler wirkend eine möglichst symmetrische Gasführung gewährleistet.

2. Eine Nachvergasung, wobei die dem Vergasungsmittelüberschuß entsprechende Kohlenstoffmenge nach Art einer Fest- oder Wanderbettvergasung im Gegenstrom in einem die Vergasungszone umhüllenden Bereich umgesetzt wird, in dem gleichzeitig die gewünschte Reaktion der Zuschlagstoffe durchgeführt werden kann. Als Sauerstoff überträgendes Vergasungsmittel dient hier nicht mehr Sauerstoff selbst, sondern Wasserdampf und/oder Kohlendioxid. Wassergas- bzw. Boudouard-Reaktion

($H_2O + C \longrightarrow CO + H_2$;
$CO_2 + C \longrightarrow 2\ CO$)

verlafen ebenso wie die Reaktion der Zuschlagstoffe endotherm, d.h. Wärme verzehrend. Auch dieser Nachvergasungsbereich erneuert sich im Betriebszustand stetig. Er ist jedoch nach außen hin nicht scharf abgegrenzt und in der eigentlichen Reduktionszone enthalten.

Im einzelenen betrifft die Erfindung nunmehr ein Verfahren zur Herstellung von Synthesegas ($CO + H_2$) durch autotherme Vergasung feinteiliger, kohlenstoffreicher Materialien mit Sauerstoff, wobei man das kohlenstoffreiche Material mit einer Teilchengröße von 0 - 0,1 mm mit Sauerstoff und ggf. Zusatzgasen in eine heiße Vergasungszone eindüst, das gebildete flugaschehaltige primäre rohe Synthesegas mit der ihm innewohnenden thermischen Energie durch eine mit den Ausgangsstoffen für eine endotherme carbothermische Reduktion gefüllte Reduktionszone und, vermehrt durch das bei der carbothermischen Reduktion entstandene Synthesegas, durch eine sich nach oben anschließende, mit den gleichen Stoffen gefüllte Vorheizzone hindurchführt und mit einer Temperatur von 300 - 1500° zur Reinigung und Konvertierung abzieht, und wobei man unterhalb der Reduktionszone das Reaktionsprodukt der carbothermischen Reduktion sowie entstandene Schlacke schmelzflüssig aus einer Sammel- und Nachreaktionszone entnimmt, welches dadurch gekennzeichnet ist, daß man als Vergasungszone in einem Haufwerk aus den Ausgangsstoffen für die carbothermische Reduktion eine Aushöhlung oder zumindest eine Wirbelzone aus solchem aufgelockerten Haufwerk erzeugt, welche auf 1300 bis 3300° gehalten wird; daß man die Reduktionszone oberhalb und seitlich von der Vergasungszone erzeugt; und daß man in der Reduktionszone gleichzeitig eine Nachvergasung durchführt, wobei im primären rohen Synthesegas enthaltener Wasserdampf und Kohlendioxid mit kohlenstoffreichem Material zu weiterem Synthesegas reagieren.

Das Verfahren der Erfindung kann weiterhin wahlweise und bevorzugt dadurch gekennzeichnet sein, daß man

a) in der Vergasungszone mit einem stöchiometrischen Sauerstoffüberschuß in Bezug auf die Oxidation zu CO arbeitet und ein 2000 bis 3300° heißes primäres rohes Synthesegas erzeugt;

b) in die Vergasungszone als Zusatzgase und Vergasungsmittel Wasserdampf und/oder Kohlendioxid eindüst und durch Reaktion mit Kohlenstoff ein 1300 bis 2000° heißes primäres rohes Synthesegas erzeugt;

c) von oben über die Vorheizzone soviel kohlenstoffreiches Material im Überschuß, bezogen auf die Stöchiometrie der endothermen carbothermischen Reduktion, in das die Vergasungszone umgebende Haufwerk einbringt, daß aus der Vergasungszone austretender Wasserdampf und/oder Kohlendioxid mit

Kohlenstoff zu weiterem Synthesegas reagieren;

d) das die Vorheizzone nach oben verlassende rohe Synthesegas von Staub und Asche befreit und diese Feststoffe zumindest teilweise im Kreislauf zusammen mit frischem kohlenstoffhaltigem Material erneut in die Vergasungszone eindüst;

e) die Ausgangsstoffe für die carbothermische Reduktion in Korngrößen von 10-20 mm, 20-40 mm und/oder 40-60 mm einsetzt, wobei bevorzugt zur optimalen Gasverteilung abwechselnd Schichten verschiedener Korngrößenbereiche übereinander geschüttet werden;

f) die Vorheizzone und die Reduktionszone mit Koks, Eisenschrott und ggf. Quarz beschickt, wobei man als Reaktionsprodukt der carbothermischen Reduktion bei 1300 bis 1800° Ferrosilizium gewinnt;

g) die Vorheizzone und die Reduktionszone mit Koks oder Anthrazit und Kalk beschickt, wobei man als Reaktionsprodukt der carbothermischen Reduktion bei 1800° bis 2300° Calciumcarbid gewinnt;

h) einen Teil des Kalks in Form von bei der Carbidvergasung anfallendem und anschließend feinpulverisiertem Kalkhydrat zusammen mit dem feinteiligen kohlenstoffreichen Material in die Vergasungszone eindüst.

i) die Vorheizzone und die Reduktionszone mit Koks und oxidischem Eisenerz beschickt, wobei man als Reaktionsprodukt der carbothermischen Reduktion bei 1300 bis 1800° metallisches Eisen gewinnt;

j) die Vorheizzone und die Reduktionszone mit Koks oder Anthrazit, Kalk, Eisen und/oder Eisenschrott und/oder Eisenoxid, und ggf. Quarz beschickt, wobei man als Reaktionsprodukte der carbothermischen Reduktionen bei 1800 bis 2300° Calciumcarbid und Ferrosilizium gewinnt;

k) die Vorheizzone und die Reduktionszone mit Koks, Calciumphosphat und Quarz beschickt, wobei man als Reaktionsprodukt der carbothermischen Reduktion bei 1300 bis 1700° elementaren Phosphor gewinnt;

l) als Zusatzgas CO, $CO_2$, $N_2$, Wasserdampf oder im Kreislauf geführtes Synthesegas einsetzt;

m) in der Symmetrieachse der Vorheizzone eine seitlich und nach oben geschlossene Pyrolysezone vorsieht, durch die von oben mindestens ein Teil des zur Vergasung und carbothermischen Reduktion bestimmten kohlenstoffreichen Materials zugeführt und darin entgast und verkokt wird, wobei die flüchtigen Entgasungs- und Verkokungsprodukte zwangsweise in dieser Zone bei von 400° bis auf 1100 bis 1500° ansteigenden Temperaturen pyrolysiert werden;

n) in die Pyrolysezone von oben Wasserdampf einführt und durch dessen Umsetzung mit Kohlenstoff einen bestimmten Wasserstoffgehalt des rohen Synthesegases einstellt;

o) in die Pyrolysezone als kohlenstoffreiches Material zerkleinerte Altreifen von Kraftfahrzeugen einsetzt.

In den Figuren 1 bis 5 sind verschiedene Ausführungsformen der erfindungsgemäßen Vorrichtung in Seitenansicht und im Schnitt dargestellt. Das Verfahren der Erfindung wird anhand dieser Darstellungen näher erläutert wie folgt:

Figur 1:

Feinstgemahlene und vorgetrocknete Vergasungskohle (kohlenstoffreiches Material; Teilchendurchmesser: 90 % kleiner als 90 /um) wird über die Zuleitung (1), den Zwischenbunker (2) und Leitung (3) auf eine Düse (4) gegeben, wo sie mit Sauerstoff aus Leitung (5) und ggf. Zusatzgas, insbesondere Kohlendioxid, Wasserdampf, Kohlenmonoxid oder rohem Synthesegas, aus Leitung (6) in die Vergasungszone (7) des Reaktorraumes (schachtförmiger Abstichgenerator) (8) injiziert und autotherm vergast wird. Der schachtförmige Abstichgenerator (8) ist dabei so ausgestaltet, daß sich die Düse (4) an einer Einstülpung (9) des Bodens in der Symmetrieachse befindet und daß durch die carbothermische Reduktion und/oder eine Nachvergasung in einer Schüttschicht mit der jeweiligen Zuschlagstoffmischung ein Hohlraum, zumindest aber eine Wirbelzone aus aufgelockertem Haufwerk, - die Vergasungszone (7) - erzeugt und stabilisiert wird. In den angrenzenden Bereichen der Schüttschicht findet dann eine Nachvergasung in der sich bildenden Reduktionszone (10) statt. Dabei ist die Körnung der Zuschlagstoffe dieser Mischung vorzugsweise 10 bis 20 mm oder 20 bis 40 mm. Oberhalb der Schüttschicht ist eine Vorheizzone (11) angeordnet, die ebenfalls eine Schüttschicht aus Zuschlagstoffmischung enthält, so daß durch Schwerkrafteinfluß die Zuschlagstoffmischung entsprechend dem Verbrauch in der Reduktionszone (10) nach unten wandert. Unterhalb der Reduktionszone (10) ist eine ringförmige Sammel- und Nachreaktionszone (12) angeordnet, in die aus der Reduktionszone (10) abtropfende, geschmolzene Schacke und Reduktionsprodukt mit einer Temperatur von 1 200 bis 2 200° hineintropfen. Die Sammel- und Nachreaktionszone (12) ist mit mindestens einer verschließbaren Abstichöffnung versehen, so daß geschmolzene Schlacke- und geschmolzenes Reduktionsprodukt über die Leitungen (13) und/oder (14) abgezogen werden können. Anschließend wird granuliert oder in Gefäßen abgekühlt. Während in der Vergasungszone (7) die Temperatur mittels eines Sauerstoffüberschusses auf etwa 2 000 bis 3 300° eingestellt wird, ergibt sich in der Reduktionszone (10) eine Temperatur von etwa 2 200°. Große Teile der Asche aus der Vergasungskohle werden daher schon in der Vergasungszone (7) verdampft und mit dem sich bildenden primären rohen Synthesegas abgeführt. Die Zuschlagstoffmischung enthält ein Reduktionsmittel, bevorzugt Koks, Schwelkoks, Anthrazit, Holzkohle oder Torfkoks, und für die gewünschte Reaktion spezifische weitere

Materialien. Die in der Vergasungszone (7) entstehenden Vergasungsprodukte werden zwangsweise durch die Reduktionszone (10) und die Vorheizzone (11) geleitet, wo sie die ihnen innewohnende Wärme an die Zuschlagstoffmischung abgeben und selbst am Oberteil des Reaktorraumes (8) mit Temperaturen zwischen 350 und 1 500° austreten. Je nach anforderung an die Menge des erzeugten Reduktionsproduktes oder die gewünschte Austrittstemperatur des Rohgases kann die Zuschlagstoffmischung nach Menge und Zusammensetzung entsprechend dosiert werden. Minimale Rohsynthesegastemperaturen ergeben sich dann, wenn die Vorheizzone (11) so ausgestaltet ist, daß die zum Wärmeaustausch zur Verfügung stehende Schüttungsoberfläche sehr groß wird und der Energieverbrauch durch Reduktionsreaktionen der Energiefreisetzung durch die autotherme Vergasungsreaktion entspricht. Am Oberteil des Reaktorraumes (8) ist eine geeignete Vorrichtung zum Einbringen der über (15) zugeführten Zuschlagstoffmischung vorgesehen, vorzugsweise in Form von Schurren, die gegen Gas abgedichtet werden, oder von Gichtverschlüssen. In der Leitung (16) kann bei hohen Austrittstemperaturen des Rohsynthesegases ein Abhitzekessel (17) vorgesehen sein, so daß das Rohsynthesegas in der Heißentstaubung (18) entstaubt und über Leitung (19) abgeleitet werden kann. Der aus der Heißentstaubung (18) abgezogene Staub kann entweder über die Leitung (20) und den Zwischenbunker (2) wieder in die Vergasungszone (7) und die Reduktionszone (10) zurückgeführt oder über die Leitung (21) entnommen oder in bestimmten Mengenverhältnissen gleichzeitig über (20) und (21) geführt werden. Auf diese Weise kann man entweder alle Restasche und Ballaststoffe aus den Einsatzmaterialien als Schlacke über die Leitung (13) bzw. (14) oder Teile davon als Staub aus (18) über Leitung (21) abziehen. Wird als Reduktionsprodukt Calziumcarbid erzeugt, welches zu Acetylen und Kalkhydrat hydrolisiert werden kann, so kann letzteres, das staubförmig mit etwa 4 Gew% Feuchtigkeit aus Trockenvergasern anfällt, über Leitung (22) zugegeben und über die Düse (4) mit injiziert werden, so daß ein Teil der Kalkkomponente in der Zuschlagstoffmischung substituiert wird.

Hierdurch wird eine Verminderung des Rohstoff- und Energieverbrauchs bewirkt, da eine Kalkrückführung sonst nur mit brikettiertem und kalziniertem Material möglich wäre. Besonderes Merkmal ist, daß der Schüttungsmantel eine Schutzfunktion für die Wandung des Reaktorraumes (8) übernimmt. Die Hindurchführung der Düse (4) durch die Einstülpung (9) am Boden des Abstichgenerators (8) wird durch Kühlkammern mit den zu- und abführenden Leitungen (23) bzw. (24) gekühlt.

Figur 2:

In weiterer Ausgestaltung der erfindungsgemäßen Vorrichtung kann im Unterschied zu Fig. 1 vorgesehen sein, eine Komponente der Zuschlagstoffmischung über Leitung (25) von der restlichen Zuschlagstoffmischung getrennt in den Reaktorraum (8) einzubringen und mit Hilfseinbauten (26) eine säulen- bzw. ringförmige Verteilung der Komponenten in der Schüttung zu erreichen.

Die Vergasungszone (7) kann entweder mit überschüssigem Sauerstoff, wodurch sich höhere Gastemperaturen einstellen oder mit überschüssigem Kohlendioxid oder Wasserdampf, wodurch sich tiefere Gastemperaturen ergeben, als Vergasungsmitteln beschickt werden, wenn die Zuschlagstoffmischung mit kohlenstoffreichem Material angereichert ist.

Figur 3:

Ebenso kann die erfindungsgemäße Vorrichtung im Unterschied zu Fig. 1 und 2 in der Sammel- und Nachreaktionskammer (12) ein Gefälle aufweisen, wodurch es möglich wird, eine bessere Phasentrennung von Schlacke und Reduktionsprodukt oder zweier Reduktionsprodukte sowie einen getrennten Abstich über die Leitungen (13) und (14) zu erreichen.

Figur 4:

In Figur 4 wird das Verfahren zum Unterschied zu Figur 2 in einer sich drehenden Vorrichtung durchgeführt. Wesentlich ist hier eine innige Durchmischung der Reaktanten der carbothermischen Reduktion, hervorgerufen durch eine während der Drehung entstehende Fließbewegung in der Sammel- und Nachreaktionskammer (12). Der Deckel (27) des Abstichgenerators (8) und die Düse (4) bleiben fixiert und sind zum Abstichgenerator (8) hin gegen Gasdurchtritt z.B. mit Stopfbüchsen, Labyrinthdichtungen oder anderen bekannten Einrichtungen (28) beweglich abgedichtet. Die Trennbleche (26) werden quasi endlos nachgeführt. Am Abstichgenerator (8) befindet sich ein Tragring (29), der von einem mit Antrieb (30) ausgestatteten Zahnkranz gedreht wird. Die Drehung erfolgt bevorzugt mit 0,2 - 2 UPM.

Figur 5:

Figur 5 zeigt schematisch einen Ausschnitt aus dem schachtförmigen Abstichgenerator (8) im Bereich der Einstülpung (9) des Bodens mit der Anordnung von zwei Düsen (4).

Die Wandung (8) im Bereich der Boden-Einstülpung und die Spitzen der Düsen (4) sind durch Kühlkammern (31), durch die ein Kühlmedium, z.B. Wasser oder ein Wärmeträgeröl fließt, kühlbar ausgestaltet. Die Innenseite der Wandung (8) ist mit feuerfestem Material (32) ausgekleidet, welches vor dem Angriff der geschmolzenen Schlacke oder dem geschmolzenen Reduktionsprodukt schützt.

Die Erfindung betrifft somit auch eine Vorrichtung zur Durchführung eines Verfahrens zur Herstellung von Synthesegas ($CO + H_2$) durch autotherme Vergasung feinteiliger, kohlenstoffreicher Materialien mit Sauerstoff in

Gegenwart von Ausgangsstoffen für eine endotherme carbothermische Reduktion, enthaltend einen Schachtofen, der im Betriebszustand, von oben nach unten betrachtet, eine langgestreckte Vorheizzone, eine Reduktionszone und eine Sammel- und Nachreaktionszone, die offen ineinander übergehen, sowie eine mit der Reduktionszone offen verbundene Vergasungszone umfaßt; Düsen für die gemeinsame Zuführung von Kohlenstaub, Sauerstoff und ggf. Zusatzgasen, Zuführleitungen für die Ausgangsstoffe der carbothermischen Reduktion und eine Abzugsleitung für rohes Synthesegas am Kopf des Schachtofens; und Abzugsleitungen aus der Sammel- und Nachreaktionszone am Boden des Schachtofens zum Abzug von geschmolzener Schlacke und schmelzflüssigem Reaktionsprodukt aus der carbothermischen Reduktion, welches dadurch gekennzeichnet ist, daß der Schachtofen ein schachtförmiger Abstichgenerator (8) mit kreisförmigem Querschnitt und mittig nach oben eingestülptem Boden ist; daß im Betriebszustand die Reduktionszone (10) die Vergasungszone (7) umschließt; daß die Sammel- und Nachreaktionszone (12) die Bodeneinstülpung (9) ringförmig umgibt; daß mindestens eine Düse (4) durch die Bodeneinstülpung (9) eingeführt ist mit angeschlossenen Leitungen (3, 5, 6) für die gemeinsame Zuführung von feinteiligem, kohlenstoffreichem Material, Sauerstoff und ggf. Zusatzgasen und staubförmigen Ausgangsstoffen für die carbothermische Reduktion.

Die Vorrichtung der Erfindung kann weiterhin wahlweise und bevorzugt dadurch gekennzeichnet sein, daß

a) sie im oberen Teil des Abstichgenerators (8) senkrecht und kreisförmig angeordnete Trennbleche (26) zur Abgrenzung eines säulenförmigen Raumes in der Symmetrieachse des Abstichgenerators (8) oberhalb der Vergasungszone (7); eine Transportleitung (25) zur Beschickung des säulenförmigen Raumes mit der Kohlenstoffkomponente der Ausgangsstoffe für die carbothermische Reduktion; sowie mindestens 2 Transportleitungen (15) für die Zufuhr weiterer Ausgangsstoffe für die carbothermische Reduktion unter Ausbildung eines die Innenwandung des Abstichgenerators (8) schützenden ringförmigen Schüttungsmantels aufweist;

b) die Trennbleche (26) durch den Kopf des Abstichgenerators (8) von außen nach innen durch Aufbringen von Schüssen quasi endlos bis zum Abschmelzen oberhalb der Vergasungszone (7) verbrauchsabhängig nachführbar sind;

c) die Gesamtheit der kreisförmig angeordneten Trennbleche (26) die Form eines Rohres hat;

d) die Trennbleche gitterartig durchbrochen und gasdurchlässig sind;

e) der Boden des Abstichgenerators (8) mit der Sammel- und Nachreaktionszone (12) mit Gefälle versehen ist;

f) der Abstichgenerator (8) mit einem seitlichen Tragring (29) versehen und auf einem Zahnkranz, mit Antrieb (30) ausgestattet und 1 bis 20 Winkelgrade zur Lotrechten geneigt, drehbar angeordnet ist; daß der Abstichgenerator (8) einen Deckel (27) trägt; daß Deckel (27), Düse (4) und die durch den Deckel geführten bzw. an die Düse angeschlossenen Zuführ- und Abzugsleitungen fixiert und zum Abstichgenerator (8) hin mit Dichtungen (28) gegen Gasdurchtritt beweglich abgedichtet sind;

g) die durch die Bodeneinstülpung eingeführte Düse (4) von einer mit Kühlmittel beschickten Kühlkammer umgeben ist;

h) mindestens 2 Düsen (4) vorgesehen sind, wobei deren Spitzen und die Wandung des Abstichgenerators (8) im Bereich der Bodenausstülpung durch von Kühlmittel durchflossene Kühlkammern (31) vor Hitze geschützt werden;

i) die Innenwandung der Sammel- und Nachreaktionszone (12) mit feuerfestem Material (32) ausgekleidet ist.

In den nachfolgenden Beispielen beziehen sich die Volumenangaben auf den Normalzustand bei 273 K und 1,013 bar.

**Beispiel 1** (Figur 2)

Als Vergasungskohle dient eine trockene Kohle mit 22 Gew% Asche, die ihrerseits als Hauptbestandteile 45 Gew% $SiO_2$, 26 Gew% $Al_2O_3$ und 12 Gew% CaO enthält. Die trockene Kohle weist 65 Gew% C und 3,5 Gew% H, Rest 9,5 Gew% O, N, S, $H_2O$ sowie einen unteren Heizwert (Hu) von 25 KJoule/g auf. Als schlackeaufnehmendes Reduktionsprodukt wird Calciumcarbid erzeugt. Dazu wird als Zuschlagstoff eine Mischung aus Koks und gebranntem Kalk in den Reaktor eingefüllt. Der Koks enthält etwa 13 Gew% Asche, 0,5 Gew% Wasser, 81 Gew% C, 1 Gew% H (Rest 4,5 Gew% O, N, S) und besitzt einen unteren Heizwert (Hu) von 29 KJoule/g. Der gebrannte Kalk wird mit etwa 95 Gew% Gesamt-CaO (CaO, $Ca(OH)_2$, $CaCO_3$, $CaSO_4$) eingesetzt.

Düst man gemäß der allgemeinen Beschreibung zu Figur 2 94 t/h Vergasungskohle zusammen mit 56 000 $m^3/h$ Sauerstoff (99,5 Vol% rein) durch die Düse (4) in die Vergasungszone (7) ein, so entsteht ein primäres Synthesegas (ca. 148 000 $m^3/h$) mit einer Temperatur von ca. 2500°C und einer Zusammensetzung (Vol%) von ca. 21 % $H_2$, 1 % $N_2$, 70 % CO, 4,5 % $CO_2$, 2,5 % $H_2O$ sowie 1 % Argon, $CH_4$, $H_2S$ und COS. Außerdem werden von der Vergasungszone (7) etwa 21 t/h geschmolzene Asche zusammen mit etwa 1,2 t/h nicht umgesetzter Kohle in die Reduktionszone (10) ausgetragen. Nach Eintritt in die Reduktionszone (10) reagiert das im primären rohen Synthesegas enthaltene $CO_2$ im Sinne der Boudouard-Reaktion mit Kohlenstoff. Das primäre rohe Synthesegas kühlt sich ab und der

vorhandene Wasserdampf reagiert mit einem entsprechenden Koksüberschuß. 7,1 t/h überschüssiger Koks werden über Leitung (25) in die Reduktionszone (10) eingeführt. Über Leitung (15) und die ringförmige Vorheizzone (11) werden als Zuschlagstoffmischung 38,9 t/h Kalk und 23 t/h Koks in die Reduktionszone (10) eingeführt. Die Carbidbildungsreaktion und Nebenreaktionen, wie z.B. Bindung des Schwefels aus schwefelhaltigen Komponenten an die basische CaO-Komponente der Zuschlagstoffmischung (R = S +

$$C + CaO \longrightarrow CaS + CO + R),$$

Entsäuerung von Restcarbonat

$$(CaCO_3 + C \longrightarrow CaO + 2\ CO)$$

oder Entwässerung von Resthydroxid

$$(Ca(OH)_2 + C \longrightarrow CaO + H_2 + CO)$$

setzen Kohlenmonoxid frei. Es entstehen ca. 177 000 $m^3/h$ rohes Synthesegas mit etwa 22 % $H_2$, 76 % CO, 1 % $N_2$ und 1 % $CO_2$, Argon, $H_2O$ und $CH_4$ (Vol%). Zusammen mit dem rohen, 450 bis 500° C heißen Synthesegas werden etwa 18 t/h Staub mit etwa 32 Gew% CaO, 29 Gew% $SiO_2$ und 14 Gew% $Al_2O_3$ über Leitung (16) ausgetragen und in der Heißentstaubung (18) vom Gas abgetrennt. Die Zuschlagstoffe für die Carbidbildung werden kontinuierlich über die Leitungen (15) und (25) von oben im Gegenstrom zum aufsteigenden Synthesegas eingeführt und in der Reduktionszone (10) zu 49 t/h Carbid mit einer Litrigkeit von ca. 248 l Acetylen je kg Carbid umgesetzt, das aus der Sammel- und Nachreaktionszone (12) diskontinuierlich abgestochen wird.

**Beispiel 2** (Figur 3)

Geht man von den gleichen Rohstoffen wie in Beispiel 1 aus, düst 135,5 t/h Vergasungskohle zusammen mit 78 000 $m^3/h$ Sauerstoff durch die Düse (4) in die auf ca. 2500° C gehaltene Vergasungszone (7) ein, beschickt über die Leitungen (15) und (25) den Abstichgenerator (8) mit einem Gemisch aus 38,9 t/h Kalk und 37,6 t/h Koks für die carbothermischen Reaktionen und die Nachvergasung und mit 8,8 t/h Eisenschrott (98 Gew% Eisen), so werden über die Leitung (13) 15,3 t/h 45 gew%iges Ferrosilizium, über Leitung (14) 45,3 t/h Calciumcarbid mit einer Litrigkeit von ca. 266 l Acetylen je kg Carbid und über Leitung (16) 257 000 $m^3/h$ rohes Synthesegas mit einer Temperatur von 400 bis 500° C erhalten, wobei letzteres 16,1 t/h Staub mit sich führt, der in der Heißentstaubung (18) abgetrennt wird. Das rohe entstaubte Synthesegas enthält etwa 22 % Wasserstoff, 77 % CO und 1 % $CH_4$, $CO_2$, $H_2O$, $N_2$ und Argon (Vol%). Der Staub enthält etwa 42 % CaO, 4 % $SiO_2$ und 23 % $Al_2O_3$ (Gew%). Der insgesamt mit den Einsatzmaterialien eingebrachten Aschemenge von 35,3 t/h steht die Menge von 16,1 t/h Staub, der über Leitung (21) abgezogen wird, gegenüber.

**Patentansprüche**

1. Verfahren zur Herstellung von Synthesegas (CO + $H_2$) durch autotherme Vergasung feinteiliger, kohlenstoffreicher Materialien mit Sauerstoff, wobei man das kohlenstoffreiche Material mit einer Teilchengröße von 0- 0,1 mm mit Sauerstoff und ggf. Zusatzgasen in eine heiße Vergasungszone eindüst, das gebildete flugaschehaltige primäre rohe Synthesegas mit der ihm innewohnenden thermischen Energie durch eine mit den Ausgangsstoffen für eine endotherme carbothermische Reduktion gefüllte Reduktionszone und, vermehrt durch das bei der carbothermischen Reduktion entstandene Synthesegas, durch eine sich nach oben anschließende, mit den gleichen Stoffen gefüllte Vorheizzone hindurchführt und mit einer Temperetur von 300 - 1500° C zur Reinigung und Konvertierung abzieht, und wobei man unterhalb der Reduktionszone das Reaktionsprodukt der carbothermischen Reduktion sowie entstandene Schlacke schmelzflüssig aus einer Sammel- und Nachreaktionszone entnimmt, dadurch gekennzeichnet, daß man als Vergasungszone in einem Haufwerk aus den Ausgangsstoffen für die carbothermische Reduktion eine Aushöhlung oder zumindest eine Wirbelzone aus solchem aufgelockerten Haufwerk erzeugt, welche auf 1300 bis 3300° C gehalten wird; daß man die Reduktionszone oberhalb und seitlich von der Vergasungszone erzeugt; und daß man in der Reduktionszone gleichzeitig eine Nachvergasung durchführt, wobei im primären rohen Synthesegas enthaltener Wasserdampf und Kohlendioxid mit kohlenstoffreichem Material zu weiterem Synthesegas reagieren.

2. Verfahren nach Anspruch 1, dadurch gekennzeichnet daß man in der Vergasungszone mit einem stöchiometrischen Sauerstoffüberschuß in Bezug auf die Oxidation zu CO arbeitet und ein 2000 bis 3300° C heißes primäres rohes Synthesegas erzeugt.

3. Verfahren nach Anspruch 1, dadurch gekennzeichnet, daß man in die Vergasungszone als Zusatzgase und Vergasungsmittel Wasserdampf und/oder Kohlendioxid eindüst und durch Reaktion mit Kohlenstoff ein 1300 bis 2000° C heißes primäres rohes Synthesegas erzeugt.

4. Verfahren nach einem der Ansprüche 1 bis 3, dadurch gekennzeichnet, daß man von oben über die Vorheizzone soviel kohlenstoffreiches Material im Überschuß, bezogen auf die Stöchiometrie der endothermen carbothermischen Reduktion, in das die Vergasungszone umgebende Haufwerk einbringt, daß aus der Vergasungszone austretender Wasserdampf und/oder Kohlendioxid mit

Kohlenstoff zu weiterem Synthesegas reagieren.

5. Verfahren nach einem der Ansprüche 1-4, dadurch gekennzeichnet, daß man das die Vorheizzone nach oben verlassende rohe Synthesegas von Staub und Asche befreit und diese Feststoffe zumindest teilweise im Kreislauf zusammen mit frischem kohlenstoffhaltigem Material erneut in die Vergasungszone eindüst.

6. Verfahren nach einem der Ansprüche 1-5, dadurch gekennzeichnet, daß man die Ausgangsstoffe für die carbothermische Reaktion in Korngrößen von 10-20 mm, 20-40 mm und/oder 40-60 mm einsetzt, wobei bevorzugt zur optimalen Gasverteilung abwechselnd Schichten verschiedener Korngrößenbereiche übereinander geschüttet werden.

7. Verfahren nach einem der Ansprüche 1 - 6, dadurch gekennzeichnet, daß man die Vorheizzone und die Reduktionszone mit Koks, Eisenschrott und ggf. Quarz beschickt, wobei man als Reaktionsprodukt der carbothermischen Reduktion bei 1300 bis 1800° C Ferrosilizium gewinnt.

8. Verfahren nach einem der Ansprüche 1 - 6, dadurch gekennzeichnet, daß man die Vorheizzone und die Reduktionszone mit Koks oder Anthrazit und Kalk beschickt, wobei man als Reaktionsprodukt der carbothermischen Reduktion bei 1800° C bis 2300° C Calclumcarbid gewinnt.

9. Verfahren nach Anspruch 8, dadurch gekennzeichnet, daß man einen Teil des Kalks in Form von bei der Carbidvergasung anfallendem und anschließend feinpulverisiertem Kalkhydrat zusammen mit dem feinteiligen Kohlenstoffreichen Material in die Vergasungszone eindüst.

10. Verfahren nach einem der Ansprüche 1 - 6, dadurch gekennzeichnet, daß man die Vorheizzone und die Reduktionszone mit Koks und oxidischem Eisenerz beschickt, wobei man als Reaktionsprodukt der carbothermischen Reduktion bei 1300 bis 1800° C metallisches Eisen gewinnt.

11. Verfahren nach einem der Ansprüche 1 - 6, dadurch gekennzeichnet, daß man die Vorheizzone und die Reduktionszone mit Koks oder Anthrazit, Kalk, Eisen und/oder Eisenschrott und/oder Eisenoxid, und ggf. Quarz beschickt, wobei man als Reaktionsprodukte der carbothermischen Reduktionen bei 1800 bis 2300° C Calciumcarbid und Ferrosilizium gewinnt.

12. Verfahren nach einem der Anspüche 1 - 6, dadurch gekennzeichnet, daß man die Vorheizzone und die Reduktionszone mit Koks, Calciumphosphat und Quarz beschickt, wobei man als Reaktionsprodukt der carbothermischen Reduktion bei 1300 bis 1700° C elementaren Phosphor gewinnt.

13. Verfahren nach einem der Ansprüche 1 - 12, dadurch gekennzeichnet, daß man als Zusatzgas CO, $CO_2$, N, Wasserdampf oder im Kreislauf geführtes Synthesegas einsetzt.

14. Verfahren nach einem der Ansprüche 1- 13, dadurch gekennzeichnet, daß man in der Symmetrieachse der Vorheizzone eine seitlich und nach oben geschlossene Pyrolysezone vorsieht, durch die von oben mindestens ein Teil des zur Vergasung und carbothermischen Reduktion bestimmten kohlenstoffreichen Materials zugeführt und darin entgast und verkokt wird, wobei die flüchtigen Entgasungs- und Verkokungsprodukte zwangsweise in dieser Zone bei von 400° C bis auf 1100 bis 1500° C ansteigenden Temperaturen pyrolysiert werden.

15. Verfahren nach Anspruch 14, dadurch gekennzeichnet, daß man in die Pyrolysezone von oben Wasserdampf einführt und durch dessen Umsetzung mit Kohlenstoff einen bestimmten Wasserstoffgehalt des rohen Synthesegases einstellt.

16. Verfahren nach Anspruch 14, dadurch gekennzeichnet, daß man in die Pyrolysezone als kohlenstoffreiches Material zerkleinerte Altreifen von Kraftfahrzeugen einsetzt.

17. Vorrichtung zur Durchführung eines Verfahrens zur Herstellung von Synthesegas ($CO + H_2$) durch autotherme Vergasung feinteiliger, kohlenstoffreicher Materialien mit Sauerstoff in Gegenwart von Ausgangsstoffen für eine endotherme carbothermische Reduktion, enthaltend einen Schachtofen, der im Betriebszustand, von oben nach unten betrachtet, eine langgestreckte Vorheizzone, eine Reduktionszone und eine Sammel- und Nachreaktionszone, die offen ineinander übergehen, sowie eine mit der Reduktionszone offen verbundene Vergasungszone umfaßt; Düsen für die gemeinsame Zuführung von Kohlenstaub, Sauerstoff und ggf. Zusatzgasen, Zuführleitungen für die Ausgangsstoffe der carbothermischen Reduktion und eine Abzugsleitung für rohes Synthesegas am Kopf des Schachtofens; und Abzugsleitungen aus der Sammel- und Nachreaktionszone am Boden des Schachtofens zum Abzug von geschmolzener Schlacke und schmelzflüssigem Reaktionsprodukt aus der carbothermischen Reduktion, dadurch gekennzeichnet, daß der Schachtofen ein schachtförmiger Abstichgenerator (8) mit kreisförmigem Querschnitt und mittig nach oben eingestülptem Boden ist; daß im Betriebszustand die Reduktionszone (10) die Vergasungszone (7) umschließt; daß die Sammel- und Nachreaktionszone (12) die Bodeneinstülpung (9) ringförmig umgibt; daß mindestens eine Düse (4) durch die Bodeneinstülpung (9) eingeführt ist mit angeschlossenen Leitungen (3, 5, 6) für die gemeinsame Zuführung von feinteiligem, kohlenstoffreichem Material, Sauerstoff und ggf. Zusatzgasen und staubförmigen Ausgangsstoffen für die carbothermische Reduktion.

18. Vorrichtung nach Anspruch 17, dadurch gekennzeichnet, daß sie im oberen Teil des Abstichgenerators (8) senkrecht und kreisförmig angeordnete Trennbleche (26) zur Abgrenzung eines säulenförmigen Raumes in der Symmetrieachse des Abstichgenerators (8) oberhalb der Vergasungszone (7); eine

Transportleitung (25) zur Beschickung des säulenförmigen Raumes mit der Kohlenstoffkomponente der Ausgangsstoffe für die carbothermische Reduktion; sowie mindestens 2 Transportleitungen (15) für die Zufuhr welterer Ausgangsstoffe für die carbothermische Reduktion unter Ausbildung eines die Innenwandung des Abstichgenerators (8) schützenden ringförmigen Schüttungsmantels aufweist.

19. Vorrichtung nach Anspruch 18, dadurch gekennzeichnet, daß die Trennbleche (26) durch den Kopf des Abstichgenerators (8) von außen nach innen durch Aufbringen von Schüssen quasi endlos bis zum Abschmelzen oberhalb der Vergasungszone (7) verbrauchsabhängig nachführbar sind.

20. Vorrichtung nach Anspruch 18 oder 19, dadurch gekennzeichnet, daß die Gesamtheit der kreisförmig angeordneten Trennbleche (26) die Form eines Rohres hat.

21. Vorrichtung nach einem der Ansprüche 18-20, dadurch gekennzeichnet, daß die Trennbleche gitterartig durchbrochen und gasdurchlässig sind.

22. Vorrichtung nach einem der Ansprüche 17-21, dadurch gekennzeichnet, daß der Boden des Abstichgenerators (8) mit der Sammel- und Nachreaktionszone (12) mit Gefälle versehen ist.

23. Vorrichtung nach einem der Ansprüche 17-22, dadurch gekennzeichnet, daß der Abstichgenerator (8) mit einem seitlichen Tragring (29) versehen und auf einem Zahnkranz, mit Antrieb (30) ausgestattet und 1 bis 20 Winkelgrade zur Lotrechten geneigt, drehbar angeordnet ist; daß der Abstichgenerator (8) einen Deckel (27) trägt; daß Deckel (27), Düse (4) und die durch den Deckel geführten bzw. an die Düse angeschlossenen Zuführ- und Abzugsleitungen fixiert und zum Abstichgenerator (8) hin mit Dichtungen (28) gegen Gasdurchtritt beweglich abgedichtet sind.

24. Vorrichtung nach einem der Ansprüche 17-23, dadurch gekennzeichnet, daß die durch die Bodeneinstülpung eingeführte Düse (4) von einer mit Kühlmittel beschickten Kühlkammer umgeben ist.

25. Vorrichtung nach einem der Ansprüche 17-23, dadurch gekennzeichnet, daß mindestens 2 Düsen (4) vorgesehen sind, wobei deren Spitzen und die Wandung des Abstichgenerators (8) im Bereich der Bodenausstülpung durch von Kühlmittel durchflossene Kühlkammern (31) vor Hitze geschützt werden.

26. Vorrichtung nach einem der Ansprüche 17-25, dadurch gekennzeichnet, daß die Innenwandung der Sammel- und Nachreaktionszone (12) mit feuerfestem Material (32) ausgekleidet ist.

**Claims**

1. Process for making synthesis gas ($CO + H_2$) by subjecting fine-particulate materials rich in carbon to an autothermal gasification reaction with oxygen, wherein the material rich in carbon having a particle size of 0 - 0,1 mm is injected together with oxygen and, if desired, auxiliary gas into a hot gasification zone, the resulting primary crude synthesis gas containing flying ashes is passed with its inherent thermal energy through a reduction zone charged with the feed materials necessary for effecting an endothermal carbothermal reduction and, increased by the synthesis gas produced during the carbothermal reduction, through a preheating zone arranged immediately above the reduction zone and filled with the same material as this latter zone, and removed with a temperature of 300 up to 1500° C for purification and conversion, and wherein molten reaction product originating from the carbothermal reduction and molten slag are taken from a collecting and post-reaction zone below the reduction zone, which comprises: forming, as the gasification zone, in a heap of loosely aggregated feed material, a cavity or at least a fluidized bed of such loosely aggregated material which is maintained at 1300 - 3000° C; forming the reduction zone above, and laterally with respect to, the gasification zone; carrying out simultaneously in the reduction zone a post-gasification reaction during which the steam contained in the primary crude synthesis gas and carbon dioxide undergo reaction with the material rich in carbon to give additional synthesis gas.

2. Process as claimed in claim 1, wherein a stoichiometric excess of oxygen with respect to the oxidation to CO, is used in the gasification zone and hot primary crude synthesis gas of 2000 - 3300° C is produced therein.

3. Process as claimed in claim 1, wherein steam and/or carbon dioxide is (are) injected as auxiliary gases and gasifying agents into the gasification zone and reacted with carbon to give hot primary crude synthesis gas of 1300 - 2000° C.

4. Process as claimed in any of claims 1 to 3, wherein an excess, based on the stoichiometry of the endothermal carbothermal reduction, of material rich in carbon is introduced from above through the preheating zone into the heap of loosely aggregated material encircling the gasification zone, so that the steam and/or carbon dioxide issuing from the gasification zone undergo reaction with the carbon to give additional synthesis gas.

5. Process as claimed in any of claims 1 to 4, wherein the crude synthesis gas issuing upwardly from the preheating zone is freed from dust and ash and these solid materials are at least partially recycled together with fresh carbonaceous material into the gasification zone.

6. Process as claimed in any of claims 1 to 5, wherein the feed materials for the carbothermal reaction are used in the form of particles with a

size of 10 - 20 mm, 20 - 40 mm and/or 40 - 60 mm, preferably by alternately heaping up, one above another, various layers of particles different in size, for optimizing gas distribution.

7. Process as claimed in any of claims 1 to 6, wherein the preheating zone and reduction zone are charged with coke, iron scrap and optionally quartz, to produce ferrosilicon as the reaction product of the carbothermal reduction at 1300 - 1800°C.

8. Process as claimed in any of claims 1 to 6, wherein the preheating zone and reduction zone are charged with coke or anthracite and lime to produce calcium carbide as the reaction product of the carbothermal reduction at 1800 - 2300°C.

9. Process as claimed in claim 8, wherein a portion of the lime, in the form of lime hydrate obtained during the gasification of carbide and successively finely pulverized, is injected together with fine-particulate material rich in carbon into the gasification zone.

10. Process as claimed in any of claims 1 to 6, wherein the preheating zone and reduction zone are charged with coke and oxidic iron ore to produce metallic iron as the reaction product of the carbothermal reduction at 1300 - 1800°C.

11. Process as claimed in any of claims 1 to 6, wherein the preheating zone and reduction zone are charged with coke and/or anthracite, lime, iron, and/or iron scrap and/or iron oxide, and optionally quartz, to produce calcium carbide and ferrosilicon as the reaction products of the carbothermal reductions at 1800 - 2300°C.

12. Process as claimed in any of claims 1 to 6, wherein the preheating zone and reduction zone are charged with coke, calcium phosphate and quartz to produce elementary phosphorus as the reaction product of the carbothermal reduction at 1300 - 1700°C.

13. Process as claimed in any of claims 1 to 12, wherein CO, $CO_2$, $N_2$, steam or cycled synthesis gas is used as the auxiliary gas.

14. Process as claimed in any of claims 1 to 13, wherein a pyrolyzing zone closed upwardly and laterally is provided around the axis of symmetry of the preheating zone, through which at least a portion of the material rich in carbon to undergo gasification and carbothermal reduction is introduced from above, degassed and coked therein, the volatile degasification and coking products being invariably pyrolyzed in said zone at temperatures increasing from 400 to 1100 - 1500°C.

15. Process as claimed in claim 14, wherein steam is introduced from above into the pyrolyzing zone and, by reacting it with carbon, a certain hydrogen content is established in the crude synthesis gas.

16. Process as claimed in claim 14, wherein crushed scrap tires of motor vehicles are the material rich in carbon used in the pyrolyzing zone.

17. Apparatus for carrying out a process for making synthesis gas ($CO + H_2$) by subjecting fine particulate materials rich in carbon to an autothermal gasification reaction with oxygen in the presence of feed materials necessary for an endothermal carbothermal reduction, the apparatus including a shaft furnace which in operation, is comprised from above to below, of: an elongated preheating zone, a reduction zone and a collecting and post-reaction zone opening directly into each other, as well as of a gasification zone opening into the reduction zone; nozzles for the joint supply of coal dust, oxygen, and optionally auiliary gases, inlets for the supply of the feed materials for the carbothermal reduction and an outlet for removing crude synthesis gas from the shaft furnace overhead; outlets for the removal from the collecting and post-reaction zone near the bottom portion of the shaft furnace of molten slag and molten reaction product originating from the carbothermal reduction, characterized in that the shaft furnace is a shaft-like tapping generator (8) having a circular cross-sectional area and a centrally inverted bottom portion; in that the reduction zone (10) encircles the gasification zone (7) during operation; in that the collecting and post-reaction zone (12) encircle the inverted bottom portion (9); in that at least one nozzle (4) connected to inlets (3, 5, 6) for the joint supply of fine particulate material rich in carbon, oxygen, and optionally auxiliary gas and dusty feed materials for the carbothermal reduction are passed through the inverted bottom portion (9).

18. Apparatus as claimed in claim 17 characterized in that it is provided, in the upper region of the tapping generator (8), with: separating plates in annular and upright position defining a columnar space around the axis of symmetry of the tapping generator (8) above the gasification zone (7); a transport line (25) for supplying the columnar space with the carbon component forming part of the feed materials for the carbothermal reduction; and with at least two transport lines (15) for supplying further feed materials for the carbothermal reduction, enabling the feed materials to aggregate as an annular jacket protecting the inside wall of the tapping generator (8).

19. Apparatus as claimed in claim 18, characterized in that, by the provision of sections, the separating plates (26) are quasi infinitely lowerable from the outside into the interior through the head of the tapping generator (8), at the same rate as they are consumed by undergoing fusion above the gasification zone (7).

20. Apparatus as claimed in claim 18 or 19, wherein all of the separating plates (26) are arranged annularly so as to form a tubular structure.

21. Apparatus as claimed in any of claims 18 to 20, characterized in that the separating plates are perforated similarly to a lattice and permeable to gas.

22. Apparatus as claimed in any of claims 17 to 21, characterized in that the bottom portion of the tapping generator (8) together with the collecting

and post-reaction zone (12) are arranged in inclined position.

23. Apparatus as claimed in any of claims 17 to 22, characterized in that the tapping generator (8) is provided with a lateral supporting ring (29), rotatably mounted on a toothed ring provided with a drive (30) and inclined through an angle of 1 to 20° with respect to the vertical axis; in that the tapping generator (8) provides support for a cover (27); in that the cover (27), nozzle (4) and the inlets and outlets passed through the cover or connected to the nozzle (4) are fixed and movably gas-sealed with respect to the tapping generator (8) by means of packings (28).

24. Apparatus as claimed in any of claims 17 to 23, characterized in that the nozzle (4) passed through the inverted bottom portion is surrounded by a cooling chamber charged with a cooling medium.

25. Apparatus as claimed in any of claims 17 to 23, characterized in that it is provided with at least two nozzles (4) of which the tips as well as the wall of the tapping generator (8) are heat-insulated in the region of the inverted bottom portion by means of the cooling chambers (31) having a cooling medium circulated therethrough.

26. Apparatus as claimed in any of claims 17 to 25, characterized in that the inside wall of the collecting and post reaction zone (12) is lined with a refractory material.

**Revendications**

1. Procédé de préparation de gaz de synthèse ($CO + H_2$) par gazéification autothermique de matières en fines particules riches en carbone avec l'oxygène, selon lequel on injecte la matière riche en carbone d'une granulométrie de 0 à 0,1 mm avec l'oxygène et, éventuellement, des gaz supplémentaires dans une zone de gazéification chaude, on envoie le gaz de synthèse brut primaire contenant des cendres volantes formé avec l'énergie thermique qui lui est propre à travers une zone de réduction remplie de matières de départ pour une réduction carbothermique endothermique et, augmenté du gaz de synthèse formé dans la réduction carbothermique, à travers une zone de préchauffage raccordée en haut de la zone de réduction et remplie des mêmes matières que cette dernière et on l'évacue à une température de 300 à 1500°C pour la purification et la conversion, et selon lequel on soutire à l'état fondu d'une zone de réception et de post-réaction au-dessous de la zone de réduction le produit de réaction de la réduction carbothermique ainsi que la scorie formée, caractérisé en ce que, comme zone de gazéification, on forme dans un tas de matières de départ pour la réduction carbothermique un creux ou au moins une zone tourbillonnaire de ces matières désagrégées que l'on maintient à 1300 à 3000°C; en ce que l'on produit la zone de réduction au-dessus de et latéralement à la zone de gazéification; et en ce que l'on effectue simultanément dans la zone de réduction une post-gazéification pendant laquelle la vapeur d'eau contenue dans le gaz de synthèse brut primaire et le dioxyde de xcarbone réagissent avec la matière riche en carbone en donnant du gaz de synthèse supplémentaire.

2. Procédé selon la revendication 1, caractérisé en ce qu'on utilise dans la zone de gazéification un excès stoechiométrique d'oxygène, par rapport à l'oxydation en CO, et on produit un gaz de synthèse brut primaire chaud à 2000-3300° C.

3. Procede selon la revendication 1, caractérisé en ce qu'on injecte dans la zone de gazéification comme gaz supplémentaires et agents de gazéification de la vapeur d'eau et/ou du dioxyde de carbone et, par réaction avec du carbone, on produit un gaz de synthèse brut primaire chaud à 1300-2000°C.

4. Procédé selon l'une des revendications 1 à 3, caractérisé en ce que l'on introduit par en haut, à travers la zone de préchauffage, dans le tas de matières entourant la zone de gazéification, la matière riche en carbone en excès tel, par rapport à la stoechiométrie de la réduction carbothermique endothermique, que la vapeur d'eau et/ou le dioxyde de carbone sortant de la zone de gazéification réagissent avec le carbone en donnant du gaz de synthèse supplémentaire.

5. Procédé selon l'une des revendications 1 à 4, caractérisé en ce que l'on débarrasse des poussières et des cendres le gaz de synthèse brut quittant la zone de préchauffage vers le haut et on injecte à nouveau ces matières solides au moins partiellement dans le circuit dans la zone de gazéification conjointement avec la matière carbonée fraîche.

6. Procédé selon l'une des revendications 1 à 5, caractérisé en ce que l'on utilise les matières de départ pour la réaction carbothermique en particules de dimensions 10-20 mm, 20-40 mm et/ou 40-60 mm, de préférence en versant alternativement, l'une sur l'autre, des couches en particules de dimensions différentes pour optimiser la distribution du gaz.

7. Procédé selon l'une des revendications 1 à 6, caractérisé en ce que l'on charge la zone de préchauffage et la zone de réduction avec du coke, des ferrailles et, éventuellement, du quartz en obtenant du ferrosilicium comme produit de réaction de la réduction carbothermique à 1300-1800°C.

8. Procédé selon l'une des revendications 1 à 6, caractérisé en ce que l'on charge la zone de préchauffage et la zone de réduction avec du coke ou de l'anthracite et de la chaux en obtenant du carbure de calcium comme produit de réaction de la réduction carbothermique à 1800-2300°C.

9. Procédé selon la revendication 8, caractérisé en ce que l'on injecte dans la zone de gazéification, conjointement avec la matière riche en carbone en fines particules, une partie de la

chaux sous forme de chaux hydratée, formée dans la gazéification du carbure et ensuite finement pulvérisée.

10. Procédé selon l'une des revendications 1 à 6, caractérisé en ce que l'on charge la zone de préchauffage et la zone de réduction avec du coke et du minerai d'oxyde ferrique en obtenant du fer métallique comme produit de réaction de la réduction carbothermique à 1300-1800° C.

11. Procédé selon l'une des revendications 1 à 6, caractérisé en ce que l'on charge la zone de préchauffage et la zone de réduction avec du coke et/ou de l'anthracite, de la chaux, du fer et/ou des ferrailles et/ou de l'oxyde de fer et, éventuellement, du quartz en obtenant du carbure de calcium et du ferrosilicium comme produits de réaction des réductions carbothermiques à 1800-2300° C.

12. Procédé selon l'une des revendications 1 à 6, caractérisé en ce que l'on charge la zone de préchauffage et la zone de réduction avec du coke, du phosphate de calcium et du quartz, en obtenant du phosphore élémentaire comme produit de réaction de la réduction carbothermique à 1300-1700° C.

13. Procédé selon l'une des revendications 1 à 12, caractérisé en ce qu'on utilise comme gaz supplémentaires CO, $CO_2$, $N_2$, la vapeur d'eau ou du gaz de synthèse recyclé.

14. Procédé selon l'une des revendications 1 à 13, caractérisé en ce que, dans l'axe de symétrie de la zone de préchauffage, on prévoit une zone de pyrolyse fermée latéralement et vers le haut, à travers laquelle on envoie par le haut, au moins une partie de la matière riche en carbone destinée à la gazéification et à la réduction carbothermique et dans laquelle on la gazéifie et on la cokéfie, les produits de dégazéification et de cokéfaction volatils étant obligatoirement pyrolysés dans cette zone à des températures croissantes de 400° C jusqu'à 1100-1500° C.

15. Procédé selon la revendication 14, caractérisé en ce qu'on introduit par le haut, dans la zone de pyrolyse, de la vapeur d'eau et, en la faisant réagir avec le carbone, on établit une certaine teneur en hydrogène dans le gaz de synthèse brut.

16. Procédé selon la revendication 14, caractérisé en ce qu'on utilise comme matière riche en carbone dans la zone de pyrolyse des pneus usés broyés d'automobiles.

17. Appareillage pour la mise en oeuvre d'un procédé de préparation de gaz de synthèse (CO + $H_2$) par gazéification autothermique de matières riches en carbone en fines particules en présence de matières de départ pour une réduction carbothermique endothermique, comportant un four à cuve qui, en fonctionnement, comprend de haut en bas, une zone de préchauffage allongée, une zone de réduction et une zone de réception et de post-réaction s'ouvrant l'une dans l'autre, ainsi qu'une zone de gazéification s'ouvrant dans la zone de réduction; des buses pour l'amenée commune de poussière de charbon, d'oxygène et, éventuellement, de gaz supplémentaires, des conduites d'amenée des matières de départ pour la réduction carbothermique et une conduite d'évacuation de gaz de synthèse brut en tête du four à cuve; et des conduites d'évacuation de la zone de réception et de post-réaction au fond du four à cuve pour l'évacuation de la scorie fondue et du produit de réaction fondu de la réduction carbothermique, caractérisé en ce que le four à cuve est un générateur de percée (8) en forme de cuve à section transversale circulaire et à fond rehaussé en son centre; en ce qu'en fonctionnement la zone de réduction (10) entoure la zone de gazéification; en ce que la zone de réception et de post-réaction (12) entoure annulairement la partie rehaussée du fond (9); en ce qu'au moins une buse (4) raccordée à des conduites (3, 5, 6) pour l'amenée commune de la matière riche en carbone en fines particules, de l'oxygène et, éventuellement, des gaz supplémentaires et des matières de départ pulvérulentes pour la réduction carbothermique traverse la partie rehaussée du fond (9).

18. Appareillage selon la revendication 17, caractérisé en ce que, dans la partie supérieure du générateur de percée (8), il présente des plaques de séparation (26) en disposition annulaire et verticale destinées à délimiter un espace colonnaire dans l'axe de symétrie du générateur de percée (8) au-dessus de la zone de gazéification (7); une conduite de transport (25) pour charger l'espace colonnaire avec le composant carboné des matières de départ pour la réduction carbothermique; ainsi qu'au moins deux conduites de transport (15) pour l'amenée de matières de départ supplémentaires pour la réduction carbothermique de manière à former une enveloppe de déversement annulaire protégeant la paroi intérieure du générateur de percée (8).

19. Appareillage selon la revendication 18, caractérisé en ce que, par mise en place de tronçons, les plaques de séparation (26) sont abaissables en fonction de leur consommation par la tête du générateur de percée (8) de l'extérieur vers l'intérieur presque indéfiniment jusqu'à fusion au-dessus de la zone de gazéification (7).

20. Appareillage selon la revendication 18 ou 19, caractérisé en ce que la totalité des plaques de séparation (26) disposées annulairement a la forme d'un tuyau.

21. Appareillage selon l'une des revendications 18 à 20, caractérisé en ce que les plaques de séparation sont perforées à la façon d'un réseau et perméables aux gaz.

22. Appareillage selon l'une des revendications 17 à 21, caractérisé en ce que le fond du générateur de percée (8) avec la zone de réception et de post-réaction (12) est en pente.

23. Appareillage selon l'une des revendications 17 à 22, caractérisé en ce que le générateur de percée (8) est pourvu d'un anneau de support (29) latéral et agencé pivotant sur une couronne dentée avec commande (30) et incliné à un angle

de 1 à 20 degrés angulaires par rapport à la perpendiculaire; en ce que le générateur de percée (8) porte un couvercle (27); en ce que le couvercle (27), la buse (4) et les conduites d'amenée et d'évacuation traversant le couvercle ou raccordées à la buse sont fixés et étanchéifiés de manière mobile vers le générateur de percée (8) par des anneaux de garniture (28) évitant le passage de gaz.

24. Appareillage selon l'une des revendications 17 à 23, caractérisé en ce que la buse (4) traversant la partie rehaussée du fond est entourée d'une chambre réfrigérante chargée d'un agent de refroidissement.

25. Appareillage selon l'une des revendications 17 à 23, caractérisé en ce qu'il comporte au moins deux buses (4), les pointes de ces dernières et la paroi du générateur de percée (8) étant protégées contre l'action de la chaleur dans la région rehaussée du fond par des chambres réfrigérantes parcourues par un agent de refroidissement.

26. Appareillage selon l'une des revendications 17 à 25, caractérisé en ce que la paroi intérieure de la zone de réceprion et de post-réaction (12) est revêtue d'un matériau réfractaire.

Fig. 1

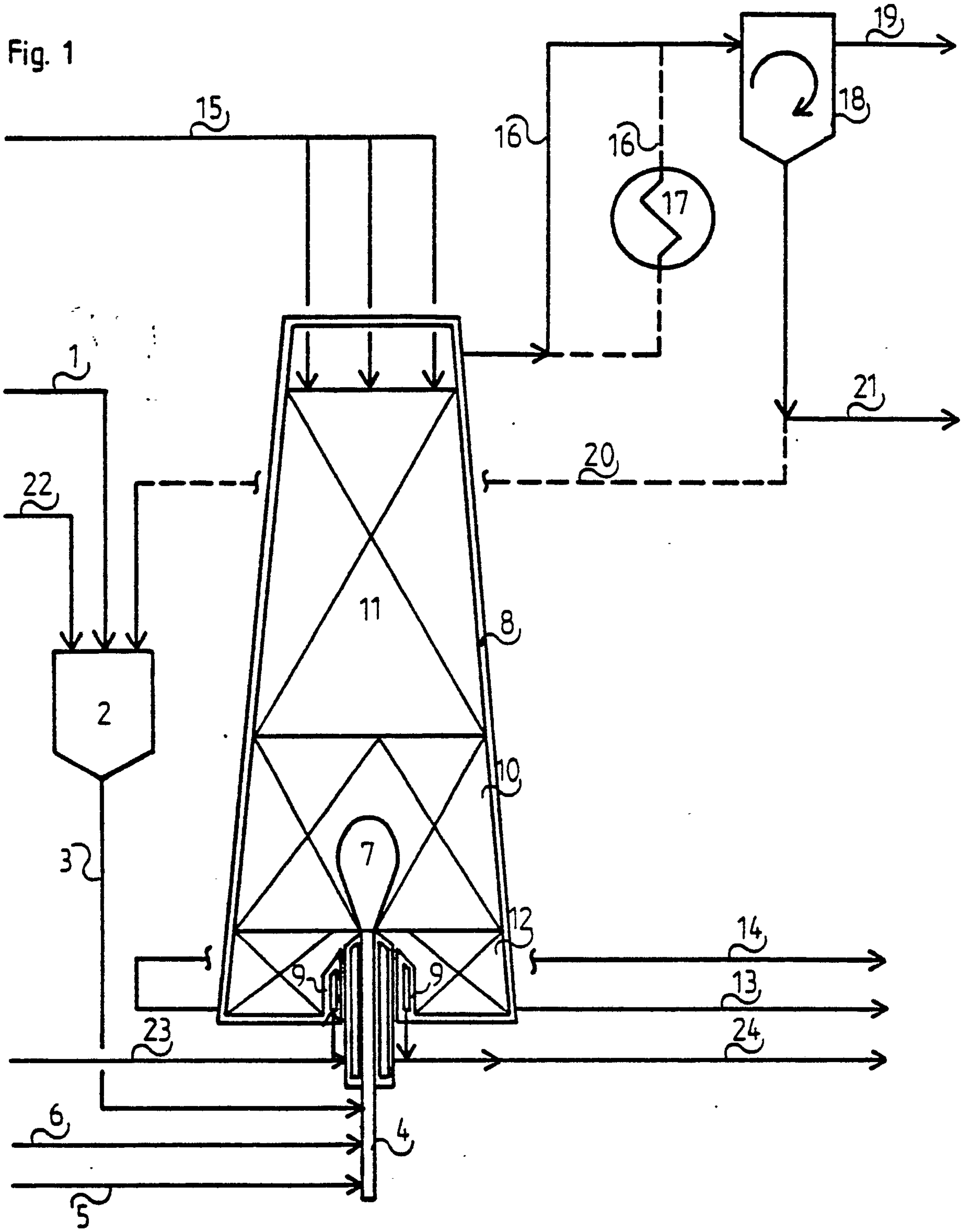

Fig. 2

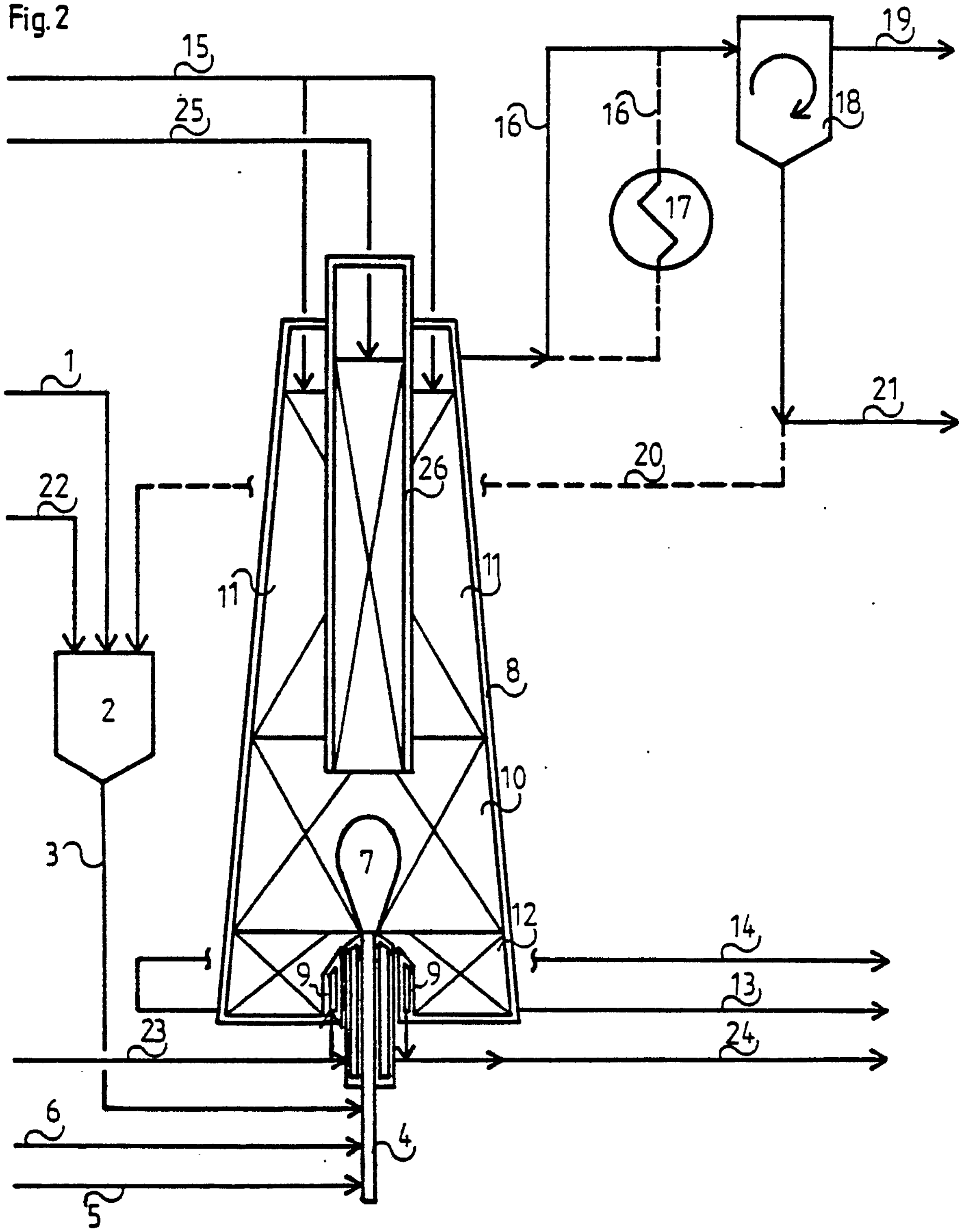

Fig. 3

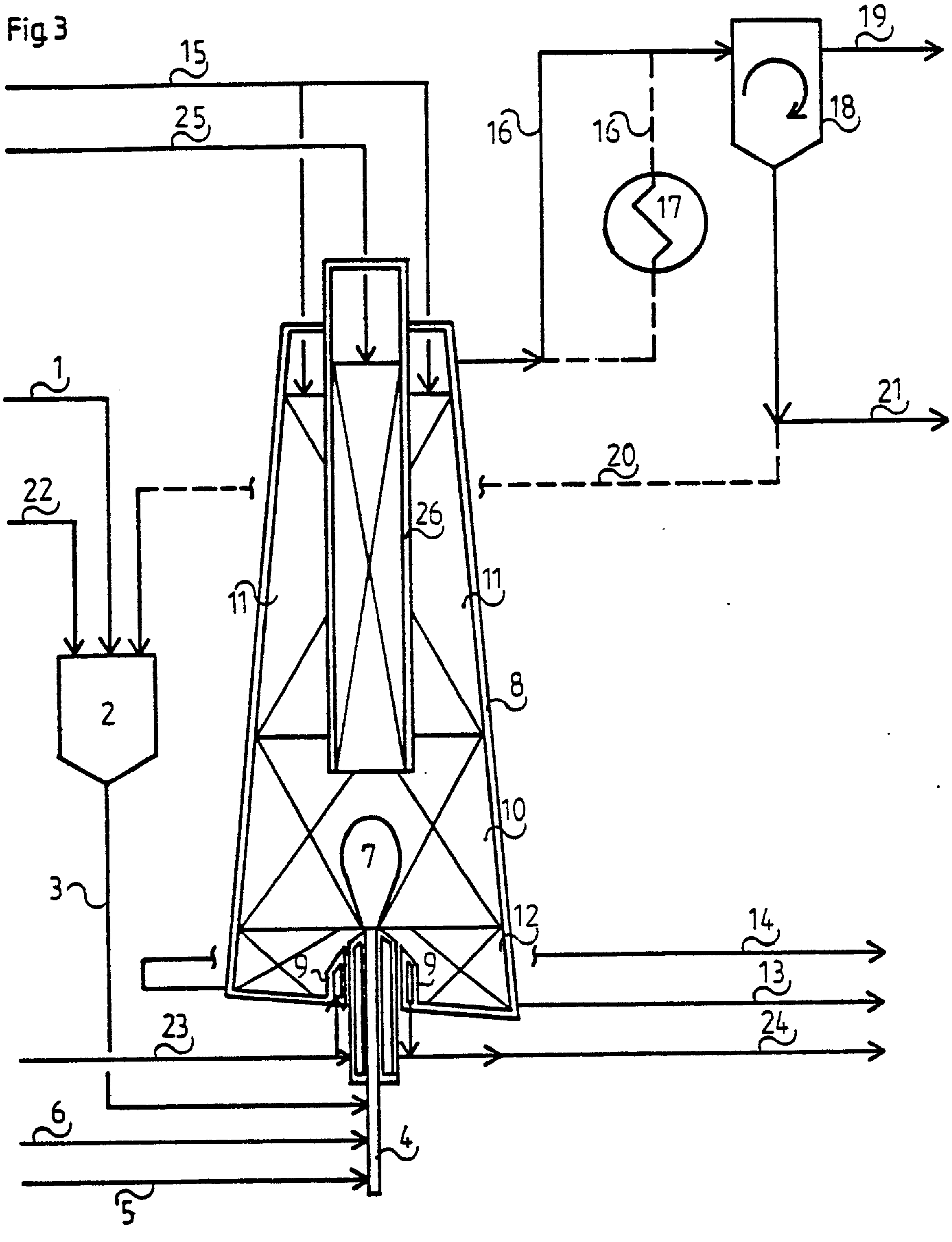

Fig. 4

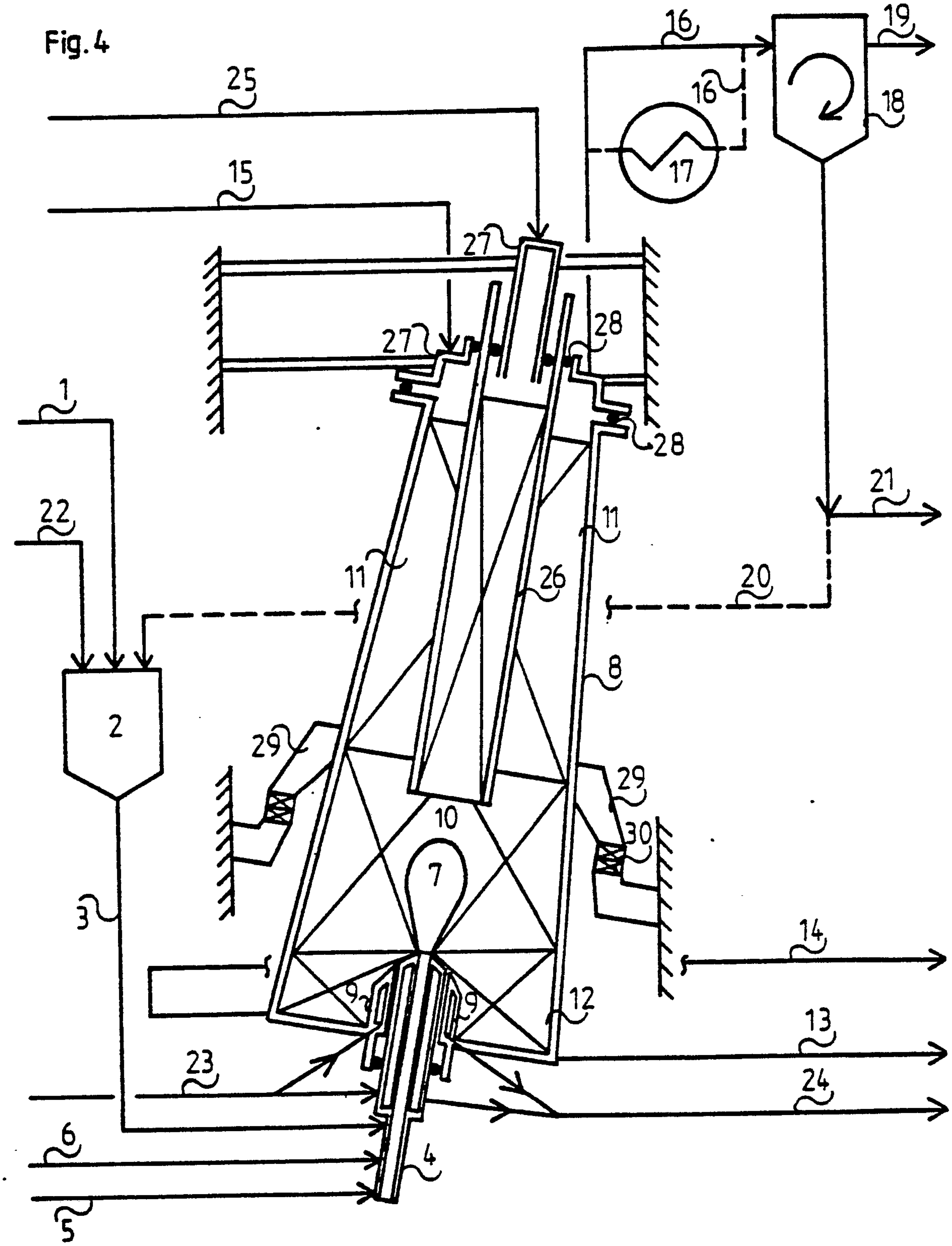

1
2
3
4
5
6
7
8
9
9
10
11
11
11
12
13
14
15
16
16
17
18
19
20
21
22
23
24
25
26
27
27
28
28
29
29
30

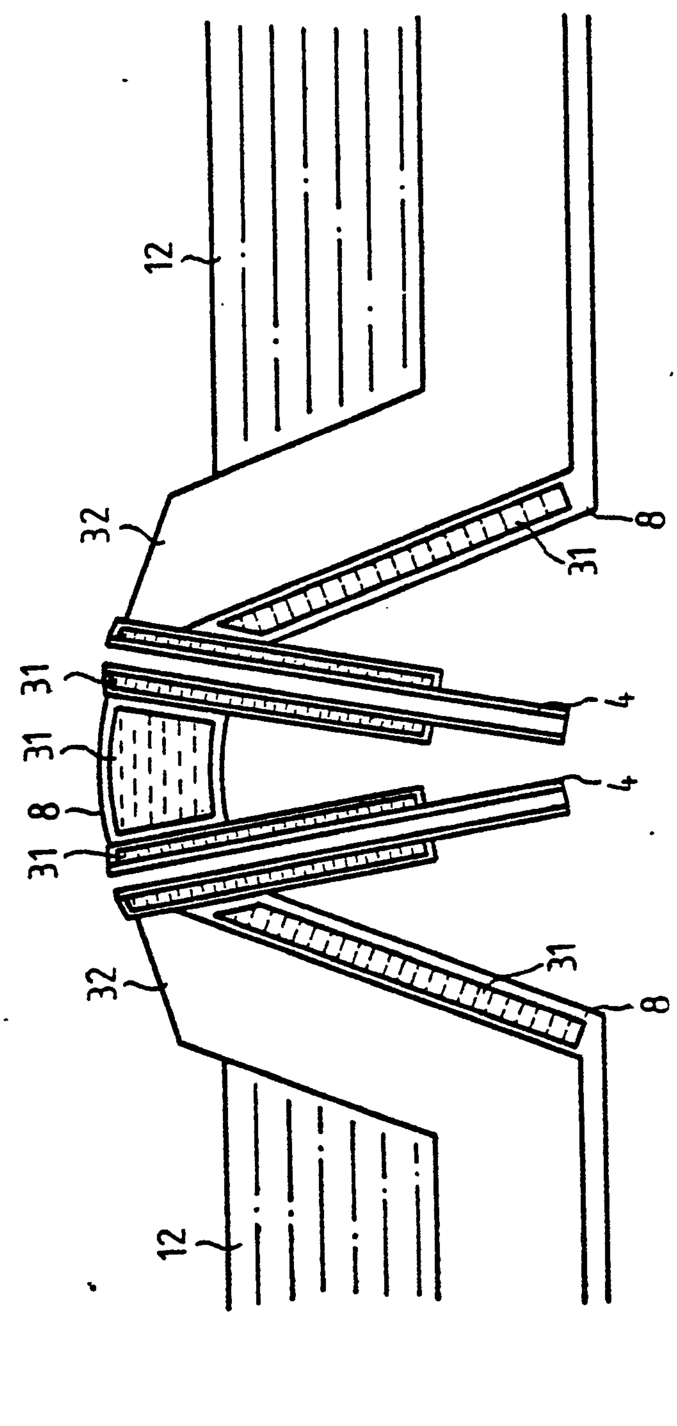


Fig.5